Europäisches Patentamt

European Patent Office

Office européen des brevets

(19)

(11) Veröffentlichungsnummer: **0 212 103 B1**

# (12) EUROPÄISCHE PATENTSCHRIFT

(45) Veröffentlichungstag der Patentschrift: **27.11.91**

(51) Int. Cl.⁵: **G01B 7/14, G01B 7/02**

(21) Anmeldenummer: **86107653.7**

(22) Anmeldetag: **05.06.86**

Die Akte enthält technische Angaben, die nach
dem Eingang der Anmeldung eingereicht wurden
und die nicht in dieser Patentschrift enthalten sind.

(54) **Vorrichtung zum Messen der Lageveränderungen von Dehnern in Rohrleitungssystemen.**

(30) Priorität: **27.07.85 DE 3527004**

(43) Veröffentlichungstag der Anmeldung:
**04.03.87 Patentblatt 87/10**

(45) Bekanntmachung des Hinweises auf die
Patenterteilung:
**27.11.91 Patentblatt 91/48**

(84) Benannte Vertragsstaaten:
**BE FR GB NL**

(56) Entgegenhaltungen:
**EP-A- 0 100 838**
**EP-A- 0 108 704**
**DE-A- 1 226 515**
**DE-A- 1 299 432**

**PATENT ABSTRACTS OF JAPAN, Band 6, Nr.
162 (P-137)[1040], 25. August 1982 & JP-
A-57-80 501**

**PATENT ABSTRACTS OF JAPAN, Band 7, Nr.
38 (P-176)[1183], 16. Januar 1983 & JP-
A-57-190 201**

(73) Patentinhaber: **THYSSENGAS GMBH**
**Duisburger Strasse 277**
**W-4100 Duisburg/Hamborn(DE)**

(72) Erfinder: **Bayer, Georg, Dipl.-Ing.**
**Spindelgang 18**
**W-4300 Essen 16(DE)**
Erfinder: **Klemm, Hans**
**Wiesenstrasse 2**
**W-4100 Duisburg 11(DE)**

(74) Vertreter: **König, Reimar, Dr.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)**

**Beschreibung**

Die Erfindung betrifft eine Vorrichtung zum Messen der von Dehnungsausgleichern in Rohrleitungssystemen aufgenommenen axialen Schub- und Zugbewegungen aus mit einem Rohr des Dehnungsausgleichers verbundenen, ein Aufnahmerohr bildenden konzentrischen Hülsrohren, in deren Zwischenraum ein elektrischer Geberschaltkreis angeordnet ist, und einem mit dem anderen Rohr des Dehnungsausgleichers verbundenen, in das innere Hülsrohr eingreifenden Gegenrohr.

Bei Rohrleitungssystemen mit Dehnungsausgleichern, d.h. zum Aufnehmen von axialen Bewegungen geeignete, in die Rohrleitung integrierte Verbindungen mit achsparallel gegeneinander verschiebbaren Bauteilen, vorzugsweise ineinandergefügten Rohren, nehmen die Rohrwandungen keine achsparallelen Kräfte auf; es treten weiterhin keine Temperatur- und Querzusammenziehungskräfte und keine hieraus sich ergebenden Spannungen auf, da sich die Längenänderungen in den Dehnungsausgleichern frei auswirken können. Hierzu kann sich ein Degenrohr mehr oder weniger weit in einem feststehenden äußeren, sogenannten Hülsrohr des Dehnungsausgleichers verschieben. Die Rohre vor und hinter dem Dehnungsausgleicher sollten achsgerecht geführt sein, um ein Klemmen innerhalb der Verbindung zu verhindern. Für den verantwortlichen Betreiber des Rohrleitungssystems ist es zur Vorbeugung und zur Vermeidung Von Schäden wichtig, genaue Auskunft über das tatsächliche Ausmaß und die Richtung dieser Bewegungen, d.h. die Positionsveränderungen des Dehnungsausgleichers zu erhalten.

Es ist bekannt, derartige Lageveränderungen periodisch unmittelbar vor Ort, d.h. an der Einbaustelle des Dehnungsausgleichers zu ermitteln, was insbesondere bei im Erdreich verlegten Rohrleitungssystemen mit einem großen Aufwand verbunden ist, bevor der Dehnungsausgleicher überhaupt zugänglich ist. Darüber hinaus müssen die Dehnungsausgleicher zum schnellen Auffinden durch beispielsweise Schilderpfähle markiert werden, was insbesondere die Nutzung landwirtschaftlicher Flächen mit darin geführten Rohrleitungssystemen einschränkt. Dieser Nachteil haftet insbesondere auch solchen mechanischen Meßvorrichtungen an, die zum Ablesen der Lageveränderungen aus dem Boden hervorragen.

Aus der EP-A- 0 100 838 ist ein Stellungsanzeigegerät für Dehnungsausgleicher bekannt, bei dem mehrere Leiterschleifen die Hülsrohre quer durchziehen und durch das Degenrohr in vorbestimmten Stellungen des Dehnungsausgleichers durchtrennt werden. Die weiteren elektrischen Verbindungen der Leiterschleifen sind im Zwischenraum zwischen dem äußeren und dem inneren Hülsrohr angeordnet und nach außen geführt.

Des weiteren ist das Innere des Geräts nur über eine Stopfbuchse zwischen dem Degenrohr und dem inneren Hülsrohr abgedichtet, das Innere ist hohl. Da nun Dehnungsausgleicher mit einem solchen Anzeigegerät in der Regel im Freien oder im Erdreich verlegt werden, besteht die Gefahr, daß Feuchtigkeit oder gar Wasser, aber auch Verunreinigungen in den Innenraum des Geräts eindringen und die Funktionsfähigkeit beeinträchtigen.

Der Erfindung liegt die Aufgabe zugrunde, eine Möglichkeit zu schaffen, mit der sich das Ausmaß und die Richtung von axialen Schub- und Zugbewegungen in einer für die Praxis ausreichenden Meßgenauigkeit an einem von der Einbaustelle eines Dehnungsausgleichers unabhängigen Ort ermitteln läßt und gleichzeitig einen sicheren Betrieb durch geeigneten Schutz des elektrischen Geberschaltkreises und der Schaltbetätigungen zu gewährleisten.

Zur Lösung dieser Aufgabe wird bei einer Vorrichtung der eingangs erwähnten Art vorgeschlagen, daß erfindungsgemäß der Schaltkreis aus einer Reihe von in axialer Richtung aufeinander folgenden Schaltern und zwischen diesen Schaltern angeordneten, in Reihe geschalteten Widerständen besteht, das Degenrohr gegenüberliegende, in axialer Richtung dicht aufeinanderfolgend angeordnete Magnete aufweist und daß der Raum zwischen den Hülsrohren sowie der Hohlraum des Degenrohres mit Gießharz vergossen sind.

Aus DE-A-1 226 515 ist an sich eine derartige Anordnung von Widerständen, Magnetschaltern und Magneten bekannt um die stellung eines arbeitszylinders feststellen zu können.

Die elektrischen Schalter werden erfindungsgemäß stufenweise magnetisch beeinflußt, so daß bei einer Lageveränderung einer oder mehrere der in Reihe geschalteten Widerstände hinzugeschaltet oder abgeschaltet werden. Diese Widerstandsänderung wird gemessen und ergibt eine Anzeige der Verlagerung des Dehnungsausgleichers.

Durch das Vergießen der Hohlräume der Hülsrohre und des Degenrohres lassen sich die elektrischen Bauteile der am Dehnungsausgleicher montierten Meßvorrichtung gegen Feuchtigkeit und Schmutz schützen, so daß die Elektrik durch die unvermeidlichen äußeren Einflüsse nicht gefährdet ist. Darüber hinaus führt das Vergießen gleichzeitig zu einer den mechanischen Einflüssen des Erdreichs entgegenwirkenden Steifigkeit der Meßvorrichtung.

Der äußere Aufbau der Meßvorrichtung entspricht somit der Konstruktion eines Dehnungsausgleichers, d.h. sie besteht aus einem Degen- und einem Aufnahmerohr; das Degenrohr greift hierbei vorteilhaft zentrisch in ein doppelwandiges, aus einem äußeren Hülsrohr und einem darin konzentrisch angeordneten inneren Hülsrohr bestehendes Aufnahmerohr ein. Die Meßgenauigkeit ist abhängig von dem Abstand zwischen den Schaltkontakten in dem das Degenrohr aufnehmenden inneren Hülsrohr. Die Rohre können zylindrisch sein; ein Vereinfachtes Herstellen ergibt sich jedoch insbesondere dann, wenn zumindest das Degenrohr aus einem Vierkantrohr besteht, in das sich beispielsweise die Magnete ohne aufwendiges Bearbeiten des Rohres einfach einsetzen lassen.

Beispielsweise lassen sich die Schaltkontakte in einem Abstand von 2 cm anordnen, womit sich eine in der Praxis als ausreichend angesehene Meßgenauigkeit von ± 2 cm ergibt. Ausgehend hiervon müßte bei einer maximalen Auszuglänge des Dehnungsausgleichers von beispielsweise 800 mm das homogene Magnetfeld im Degenrohr durch vierzig im Abstand von 2 cm eingesetzte Magnete, vorzugsweise Dauermagnete, erzeugt werden; die Meßkette - auch mehrere um das Degenrohr herum angeordnete Meßketten - müßte dementsprechend aus vierzig elektrischen Kontakten und vierzig Widerständen bestehen, die abwechselnd jeweils mit einem Zentimeter Abstand in dem Zwischenraum des doppelwandigen Hülsrohres angeordnet sind. Beim Einbau der Meßvorrichtung in den Dehnungsausgleicher des Rohrleitungssystems läßt sich die Eintauchtiefe des Degenrohres in das innere Hülsrohr so wählen, daß in der Ausgangslage genau die Hälfte der Kontakte geschlossen und somit entsprechend die Hälfte der Widerstände überbrückt sind. Wird bei einer späteren Messung ein größerer Widerstand als beim Einbau festgestellt, so ist der Dehnungsausgleicher auseinandergezogen, ist der Widerstand hingegen kleiner als zuvor, ist der Dehnungsausgleicher ineinandergeschoben worden. Falls die eingebauten Kontakte herstellungsbedingt nicht immer denselben Abstand voneinander und damit unterschiedliche Ansprechzeiten aufweisen, läßt sich anhand der gemessenen Werte beispielsweise in einer Tabelle die Größe der Bewegung in Zentimetern ablesen. Vorzugsweise werden die Endpunkte und beliebige Zwischenabgriffe der Meßkette über einzelne Leiter eines mehradrigen Kabels zu einer Meßstelle geführt.

Durch ein Anschlußkabel für das aus der Meßvorrichtung herausgeführte Kabel läßt sich der Ort, an dem die Stellung des Dehnungsausgleichers gemessen werden soll, unabhängig von der Einbaustelle des Dehnungsausgleichers in einem gut zugänglichen Bereich frei wählen. Das Kabel könnte beispielsweise bis zum Wegrand eines Feldes, bzw. einer landwirtschaftlich genutzten Fläche geführt werden und dort in einem Meßpfahl enden. Eine Kontrollperson brauchte dann lediglich die Meßpfähle abzufahren und ein Meßgerät, beispielsweise ein für Widerstandsmessungen handelsübliches Multimeter, an die Meßbuchsen des Meßpfahls anzuschließen, um den Gesamtwiderstand der Kette zu ermitteln. Zur Meßwertaufnahme ist keine elektrische Hilfsenergie erforderlich, und die Kabellängen zur Meßwertübertragung sind unproblematisch; selbst eine notwendige Verlängerung des Kabelweges verfälscht den Meßwert nicht.

Da das Magnetfeld vorzugweise von Dauermagneten erzeugt wird, ist es vorteilhaft, wenn das Degenrohr und das Hülsrohr der Meßvorrichtung aus einem nichtmagnetischen Werkstoff, vorzugsweise aus Kunststoff, wie beispielsweise PVC bestehen und damit die magnetische Neutralität der Meßvorrichtung gewährleisten.

Um den Einfluß der insbesondere durch die Bewegung der Rohrleitung im Erdreich bewirkten mechanischen Beschädigungen auf die Kunststoffrohre der Meßvorrichtung weiter herabzusetzen und die Festigkeit der ineinandergeschobenen Rohre zu erhöhen, kann das Hülsrohr an einem Ende abgeschrägt, mit einem Deckel verschlossen und von einem einseitig abgeschrägten und mit einem Deckel verschlossenen Stahlrohr aufgenommen werden, wobei das Stahlrohr mit einer Montageplatte am inneren Rohr des Dehnungsausgleichers befestigt werden kann. Auf diese Weise werden die Kunststoffrohre von dei sie einschließenden Stahlrohr geschützt, wobei durch das An- bzw. Aufeinanderliegen der ca. 45° abgeschrägten, mit aufgeschweißten Deckeln verschlossenen Flächen ein Verdrehen des in das Stahlrohr eingeführten Hülsrohres um die eigene Achse verhindert wird. Ein an dem der Schrägfläche abgewandten Ende des Stahlrohres durchgesteckter Schraubenbolzen kann hierbei das etwas kürzere Hülsrohr gegen Herausziehen sichern. Die an dem der Schrägfläche abgewandten Ende des Stahlrohres ebenfalls angeschweißte Montageplatte weist einen dem Durchmesser des Dehnungsausgleichers entsprechenden Radius auf und wird mit dem Dehnungsausgleicher beispielsweise durch Schweißen verbunden.

Das Degenrohr läßt sich vorzugsweise mittels eines stabartigen Trägers an dem festen Flansch des Dehnungsausgleichers befestigen, wobei der Träger eine das aus dei Hülsrohr herausgeführte vordere Ende des Degenrohres aufnehmende Hülse aufweist.

An dem beispielsweise als Vierkanteisen ausgebildeten Träger kann vorteilhaft weiterhin ein geschlitzter Rohrmantel befestigt sein, der sich um das Stahlrohr legen läßt und sich zumindest bis zur Stirnseite des vorderen Endes des Degenrohres erstreckt. Bei Bewegungen des Hüls- und Degenrohres gegeneinander verhindert der auf dem Stahlrohr gleitende Rohrmantel ein unerwünschtes Eindringen von Schmutz in das Hülsrohr. Der schützende Rohrmantel schafft zudem einen weitgehend erdfreien Hohlraum für das Degenrohr und schirmt dieses gleichzeitig vor Erddruck ab. Damit liegt eine rohrnahe, gegen axiale und radiale Bewegungen von Rohrleitungen und Erddruck widerstandsfähige Befestigung der Meßvorrichtung am Einbauort vor.

Die Erfindung wird nachfolgend anhand eines in der Zeichnung dargestellten Ausführungsbeispiels näher erläutert. In der Zeichnung zeigen.

Fig. 1      eine Seitenansicht einer an einem Dehnungsausgleicher eines Rohrleitungssystems angeordneten Meßvorrichtung;

Fig. 2      eine Seitenansicht eines die Rohre der Meßvorrichtung aufnehmenden Stahlrohres mit einer an einem Ende angeordneten Montageplatte, teilweise geschnitten;

Fig. 3      den Gegenstand gemäß Fig. 2, entlang der Linie III-III geschnitten;

Fig. 4      eine Seitenansicht eines äußeren Hülsrohres der Meßvorrichtung, teilweise geschnitten;

Fig. 5      eine Seitenansicht eines inneren Hülsrohres, teilweise geschnitten;

Fig. 6      eine Seitenansicht eines Degenrohres der Meßvorrichtung;

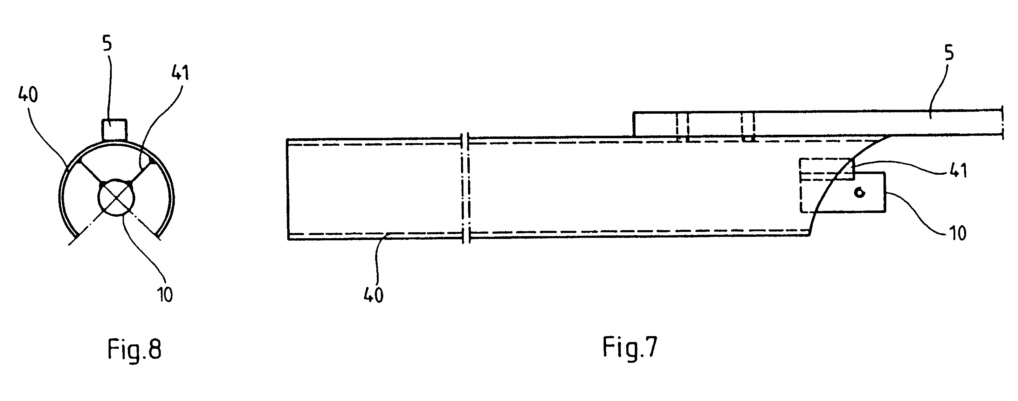

Fig. 7      eine Seitenansicht eines geschlitzten, an einem Vierkanteisen befestigten Rohrmantels;

Fig. 8      eine Ansicht des Gegenstandes gemäß Fig. 7, von der vorderen Seite des Degenrohrs gesehen;

Fig. 9      eine aus Kontakten und Widerständen gebildete Meßkette, deren Endpunkte und Zwischenabgriffe über einzelne Leiter eines mehradrigen Kabels zu einer Meßstelle geführt werden, schematisch dargestellt; und

Fig. 10      einen Querschnitt der Meßvorrichtung, d.h. des von einem doppelwandigen Hülsrohr aufgenommenen Degenrohrs, auszugsweise dargestellt.

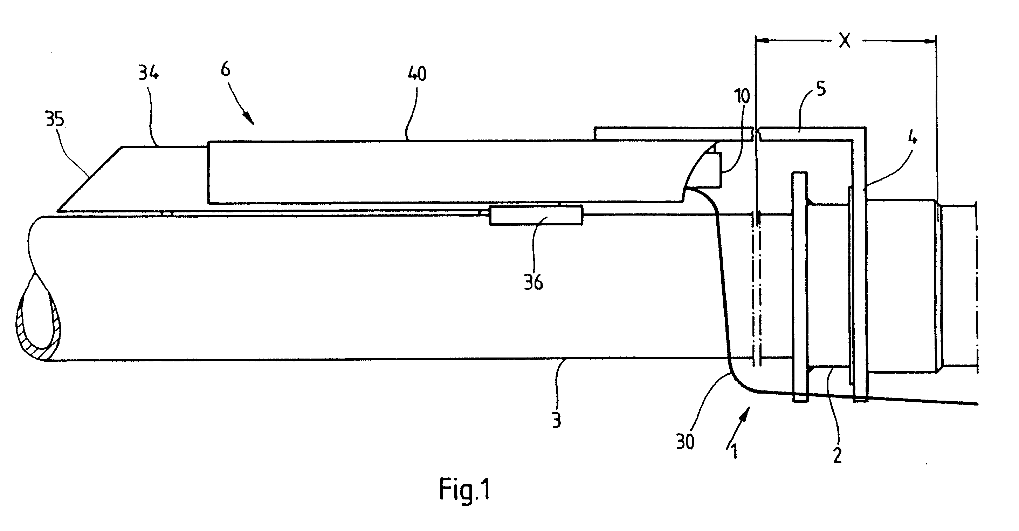

An einen Dehnungsausgleicher 1 eines ausschnittsweise dargestellten, im Erdreich verlegten Rohrleitungssystems, der aus einem äußeren Rohr 2 und einem in das äußere Rohr eingreifenden inneren Rohr 3 besteht, und sich in dem in Fig. 1 mit "X" gekennzeichneten Bereich des Rohrleitungssystems erstreckt und innerhalb dieses Bereichs liegende Längenveränderungen erlaubt, ist mittels eines an einem festen Flansch 4 des Dehnungsausgleichers 1 befestigten, als Vierkanteisen ausgebildeten, stabartigen Trägers 5 eine aus ineinander gesteckten und teilweise achsparallel beweglichen zylindrischen Rohren zusammengesetzte Meßvorrichtung 6 montiert.

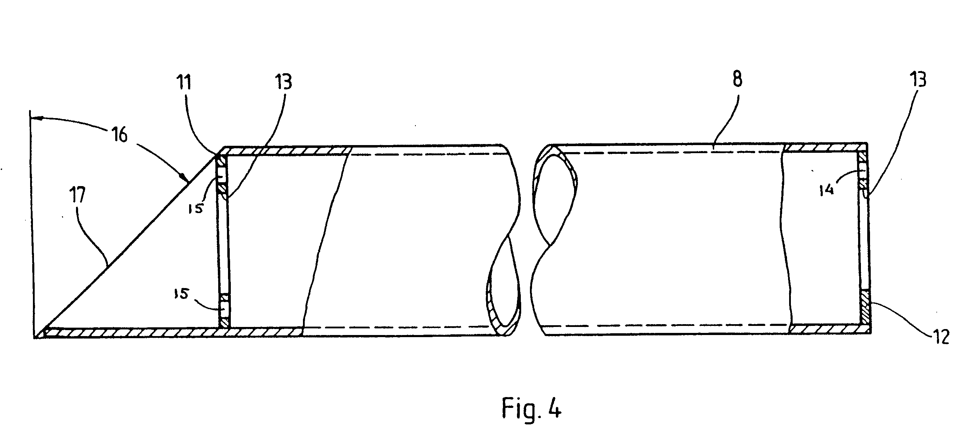

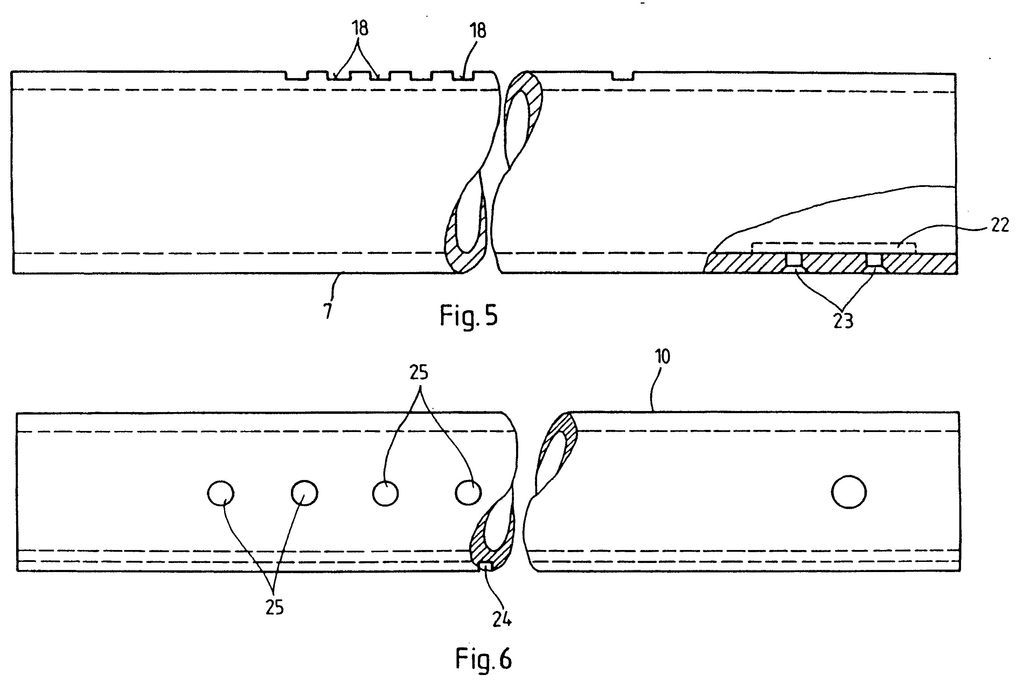

Die eigentliche Meßvorrichtung 6 wird hierbei von den in den Fig. 4 bis 6 dargestellten Kunststoff-Rohren gebildet, wobei durch Ineinanderfügen des inneren Hülsrohres 7 gemäß Fig. 5 in das äußere Hülsrohr 8 gemäß Fig. 4 ein doppelwandiges Aufnahmerohr entsteht, in dessen zentrischen Hohlraum 9 das in Fig. 6 dargestellte Degenrohr 10 eingreift. Das äußere Hülsrohr 8 ist an beiden Seiten durch Kunststoffringe 11, 12 verschlossen, die eine zentrische Bohrung 13 aufweisen; die Durchmesser der Bohrungen sind gleich groß. Weiterhin befindet sich im rechten Ring 12 eine Kabeldurchführung 14 und im linken Ring sind zwei Bohrungen 15 zum Vergießen der Hohlräume des Hülsrohres mit Gießharz angeordnet. Am linken Ende des äußeren Hülsrohres 8 verläuft zudem im Winkel 16 von ca. 45° ein Abschlußdeckel 17.

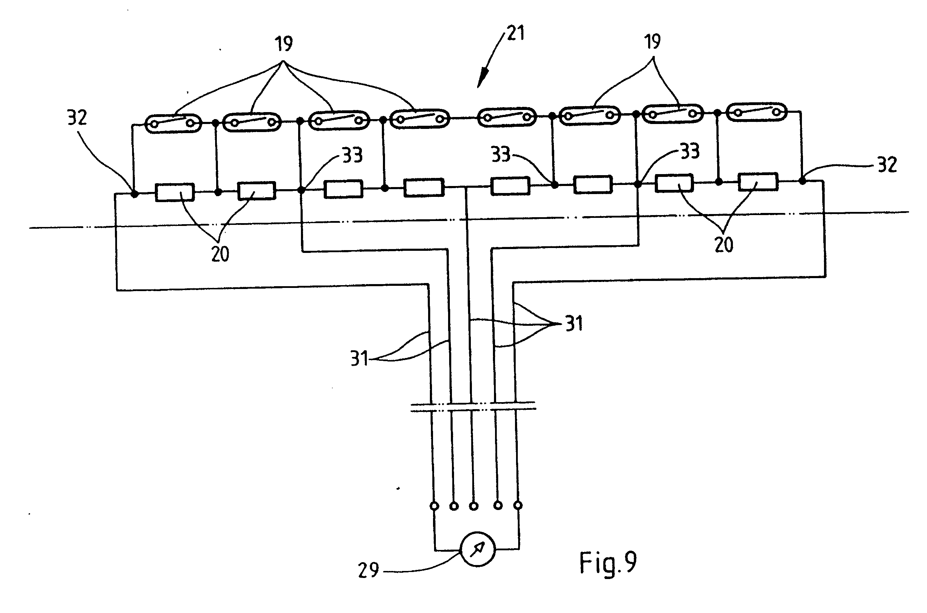

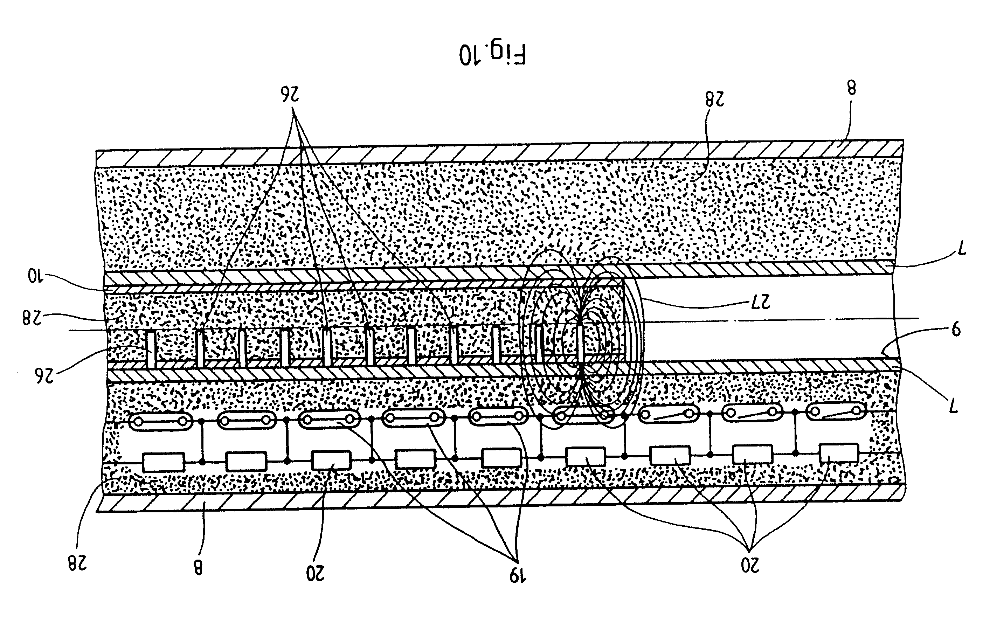

In den Außenmantel des Hülsrohres 7 sind fit gleichem Abstand voneinander eine Vielzahl von radialen Ausnehmungen 18 eingearbeitet; diese werden mit elektrischen Kontakten 19, beispielsweise Reed-Kontakten, sowie mit Widerständen 20 bestückt, so das eine Meßkette 21 (Fig. 9) entsteht, bei der jeweils zwischen zwei Kontakten ein Widerstand angeordnet ist. Im Innenmantel des Hülsrohres 7 wird ein Keil 22 durch Schrauben 25 gesichert. Beim Einsetzen des Degenrohres 10 in das innere Hülsrohr 7 legt sich der Keil 22 in eine Nut 24 des Degenrohrs 10 und gewährleistet durch die bestimmte Einbaulage eine für das Messen in Richtung auf das durch in Bohrungen 25 des Hülsrohres 10 eingesetzte Dauermagneten 26 ausgerichteten Magnetfeldes 27 (Fig. 10) weisende Stellung der Meßkette.

Sowohl der Zwischenraum der aus dem inneren und dem äußeren Hülsrohr 7, 8 gebildeten doppelwandigen Hülsrohres als auch der Hohlraum des Degenrohres 10 werden mit einem Gießharz 28 vergossen; hierdurch werden die elektrischen Bauteile einerseits vor Feuchtigkeit geschützt und andererseits in ihrer Lage in den Rohren gehalten. Die in Fig. 10 auszugsweise dargestellte betriebsbereite Meßvorrichtung registriert Positionsveränderungen des Dehnungsausgleichers 1, indem sich das Degenrohr 10 gegenüber dem doppelwandigen Hülsrohr 7, 8 relativ mehr oder weniger weit verschiebt, wobei die dem Magnetfeld 27 ausgesetzten Kontakte 19 geschlossen sind und die ihnen zugeordneten Widerstände 20 überbrücken. Das Überbrücken von Widerständen bewirkt eine Änderung des Gesamtwiderstandes aller in Reihe geschalteten Widerstände 20; der Gesamtwiderstand kann mittels eines Meßgerätes 29 am Ende eines durch die Durchführung 14 aus dem Hülsrohr 8 herausgeführten Kabels 30 abgelesen werden. Über einzelne Leitern 31 des mehradrigen Kabels 30 können Endpunkte 32 sowie Zwischenabgriffe 33 der Meßkette 21 erfaßt werden.

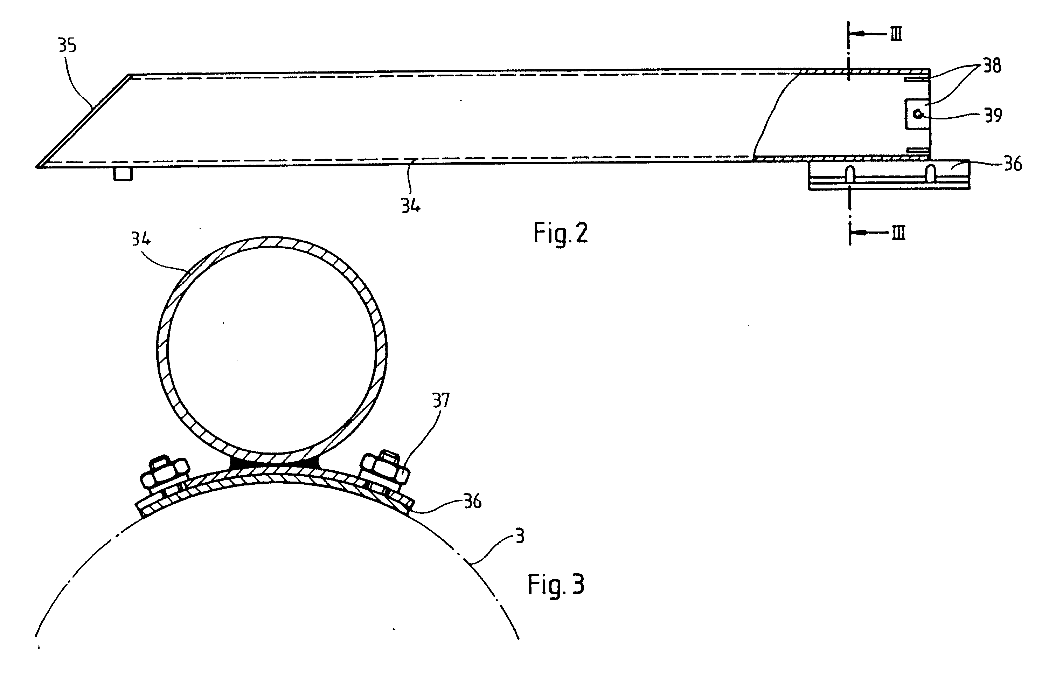

Die ineinander geschachtelten Kunststoffrohre 7, 8, 10 werden zum Schutz vor mechanischen Beschädigungen von einem Stahlrohr 34 aufgenommen, das an einem Ende mit einem der Schräge des äußeren Hülsrohres 8 entsprechenden Deckel 35 verschlossen ist. Am anderen Ende des Stahlrohres 34 ist eine dem Radius des inneren Rohres 3 des Dehnungsausgleichers 1 entsprechende Montageplatte 36 angeordnet, mit der das Stahlrohr 34 mittels Schrauben 37 (Fig. 3) am inneren Rohr 3 des Dehnungsausgleichers 1 befestigt wird. Am vorderen Ende des Stahlrohres 34 befinden sich umfangsverteilt eingesetzte Muttern 38 mit Gewindebohrungen 39, so daß sich die Einbaulage des in das Stahlrohr 34 eingesetzten Hülsrohres 8 durch Schrauben arretieren läßt.

Um zu vermeiden, daß Schmutz in das Hülsrohr eindringt, wird um das Stahlrohr 34 ein geschlitzter Rohrmantel 40 gelegt, der fest mit dem stabartigen Träger 5 sowie mit einer das aus dem Hülsrohr herausgeführte Ende des Degenrohres 10 aufnehmenden Hülse 41 verbunden ist. Der Rohrmantel 40 erstreckt sich in Längsrichtung zumindest soweit über das Degenrohr 10, daß er mit diesem eine stirnseitig abschließende Ebene bildet.

Je nachdem ob sich gemäß der in Fig. 1 dargestellten Einbaulage der gesamten Vorrichtung, d.h. sowohl der Meßvorrichtung 6 als auch der Schutzrohre 34, 40, das innere Rohr 3 oder das äußere Rohr 2 des Dehnungsausgleichers 1 bewegt, werden zwei unterschiedliche Bewegungsabläufe hervorgerufen. Bei Verschiebungen des inneren Rohres 3 überträgt sich die Bewegung des Rohres 3 über die Montageplatte 36 auf das Stahlrohr 34 und damit auf das darin gelagerte doppelwandige Hülsrohr 7, 8, das sich entsprechend mehr oder weniger weit über das Degenrohr 10 schiebt; das Stahlrohr 34 gleitet hierbei in dem in diesem Fall nicht bewegten Rohrmantel 40. Bei Bewegungen des Rohres 2 überträgt sich die dadurch bedingte Lageveränderung des Dehnungsausgleichers 1 über den stabartigen Träger 5 auf den Rohrmantel 40 und das damit über die Hülse 41 verbundene Degenrohr 10, das sich dann entsprechend im zentrischen Hohlraum 9 des Hülsrohres 7, 8 verstellt; hierbei gleitet der Rohrmantel 40 über das dann stationäre Stahlrohr 34.

**Patentansprüche**

1. Vorrichtung zum Messen der von Dehnungsausgleichern in Rohrleitungssystemen aufgenommenen axialen Schub- und Zugbewegungen aus mit einem Rohr des Dehnungsausgleichers verbundenen, ein Aufnahmerohr bildenden, konzentrischen Hülsrohren (7,8), in deren Zwischenraum ein elektrischer Geberschaltkreis angeordnet ist, und einem mit dem anderen Rohr des Dehnungsausgleichers verbundenen, in das innere Hülsrohr (7) eingreifenden Degenrohr (10), dadurch gekennzeichnet, daß der Schaltkreis aus einer Reihe von in axialer Richtung aufeinander folgenden Schaltern (19) und zwischen diesen Schaltern (19) angeordneten, in Reihe geschalteten Widerständen (20) besteht, das Degenrohr (10) dem Schaltkreis gegenüberliegende, in axialer Richtung dicht aufeinanderfolgend angeordnete Magnete (26) aufweist und daß der Raum zwischen den Hülsrohren (7, 8) sowie der Hohlraum des Degenrohres (10) mit Gießharz (28) vergossen sind.

2. Vorrichtung nach Anspruch 1, dadurch gekennzeichnet, daß die Magnete (26) Dauermagnete sind.

3. Vorrichtung nach Anspruch 1 oder 2, dadurch gekennzeichnet, daß das Degenrohr (10) und die Hülsrohre (7, 8) aus einem nicht magnetischen Werkstoff bestehen.

4. Vorrichtung nach einem oder mehreren der Ansprüche 1 bis 3, dadurch gekennzeichnet, daß das Degenrohr (10) und die Hülsrohre (7,8) aus Kunststoff bestehen.

5. Vorrichtung nach einem oder mehreren der Ansprüche 1 bis 4, dadurch gekennzeichnet, daß das äußere Hülsrohr (8) an einem Ende abgeschrägt und mit einem Deckel (17) verschlossen ist.

6. Vorrichtung nach einem oder mehreren der Ansprüche 1 bis 5, dadurch gekennzeichnet, daß das äußere Hülsrohr (8) von einem einseitig abgeschrägten und mit einem Deckel (35) verschlossenen Stahlrohr (34) aufgenommen wird und das Stahlrohr (34) mit einer Montageplatte (36) am inneren Rohr (3) des Dehnungsausgleichors (1) befestigt ist.

7. Vorrichtung nach einem oder mehreren der Ansprüche 1 bis 6, dadurch gekennzeichnet, daß das Degenrohr (10) mittels eines stabartigen Trägers (5) an dem festen Flansch (4) des Dehnungsausgleichers (1) befestigt ist, wobei der Träger (5) eine das aus dem Hülsrohr (8) herausgeführte vordere Ende des Degenrohres (10) aufnehmende Hülse (41) aufweist.

8. Vorrichtung nach Anspruch 7, dadurch gekennzeichnet, daß ein am Träger (5) befestigter geschlitzter Rohrmantel (40) um das Stahlrohr (34) gelegt ist und sich zumindest bis zur Stirnseite des vorderen Endes des Degenrohres (10) erstreckt.

9. Vorrichtung nach einem oder mehreren der Ansprüche 1 bis 8, dadurch gekennzeichnet, daß Endpunkte (32) und beliebige Zwischenabgriffe (33) der Meßkette (21) über einzelne Leiter (31) eines mehradrigen Kabels (30) zu einer Meßstelle geführt sind.

## Claims

1. Apparatus for measuring the axial expansion and contraction movements taken up by expansion compensators, comprising concentric tubular sleeves (7, 8) forming a receiver tube connected to one tube of the expansion compensator and having a detector switching circuit arranged in the space between the sleeves and a plunger tube (10) connected to the other tube of the expansion compensator and engaging in the inner tubular sleeve (7), characterised in that the circuit comprises a row of switches (19) arranged in succession in the axial direction with resistors (20) connected in series between these switches (19), that the plunger tube (10) comprises magnets (26) facing the circuit and arranged in close succession in the axial direction, and that the space between the tubular sleeves (7, 8) and the space inside the probe tube (10) are filled with casting resin (28).

2. Apparatus according to claim 1, characterised in that the magnets (26) are permanent magnets.

3. Apparatus according to claim 1 or claim 2, characterised in that the plunger tube (10) and the tubular sleeves (7, 8) consist of a non-magnetic material.

4. Apparatus according to any one or more of claims 1 to 3, characterised in that the plunger tube (10) and the tubular sleeves (7, 8) consist of plastics material.

5. Apparatus according to any one or more of claims 1 to 4, characterised in that one end of the outer tubular sleeve (8) is bevelled and closed with a cap (17).

6. Apparatus according to any one or more of claims 1 to 5, characterised in that the outer tubular sleeve (8) is received by a steel tube (34) that is bevelled at one end and closed with a cap (35) and that the steel tube (34) is fixed to the inner tube (3) of the expansion compensator (1) by a mounting plate (36).

7. Apparatus according to any one or more of claims 1 to 6, characterised in that the plunger tube (10) is fixed to the fixed flange (4) of the expansion compensator (1) by means of a rod-like carrier (5), and the carrier (5) is provided with a sleeve (41) that receives the front end of the plunger tube (10) that projects from the tubular sleeve (8).

8. Apparatus according to claim 7, characterised in that a slit tubular jacket (40) fixed on to the carrier (5) surrounds the steel tube (34) and extends at least to the face of the front end of the plunger tube (10).

9. Apparatus according to any one or more of claims 1 to 8, characterised in that the end point (32) and any desired intermediate tappings (33) of the measuring chain (21) are connected to a measuring point via individual electric leads (31) of a multiconductor cable (30).

## Revendications

1. Dispositif de mesure des déplacements axiaux par poussée et traction absorbés dans les systèmes de canalisations tubulaires par les compensateurs de dilatation, qui comprend des tubes extérieurs concentriques (7, 8), qui constituent un tube de réception relié à l'un des tubes du compensateur de dilatation et comportent, dans l'espace qui les sépare, un circuit électrique à détecteurs, et un tube intérieur (10) engagé dans celui (7) des tubes extérieurs concentriques qui est situé le plus à l'intérieur et relié à l'autre tube du compensateur de dilatation, caractérisé en ce que le circuit électrique est constitué par une série de commutateurs (19) qui se succèdent dans le sens axial et par des résistances (20) montées en série intercalées entre ces commutateurs (19), en ce que le tube intérieur (10) contient des aimants qui sont situés en face du circuit électrique et se suivent de très près dans le sens axial et en ce que l'espace qui sépare l'un de l'autre les tubes extérieurs concentriques (7, 8) ainsi que la cavité du tube intérieur (10) sont remplis de résine coulée (28).

2. Dispositif selon la revendication 1, caractérisé en ce que les aimants (26) sont des aimants permanents.

3. Dispositif solon l'une des revendications 1 ou 2 caractérisé en ce que le tube intérieur (10) et les tubes extérieurs concentriques (7, 8) sont en une matière non magnétique.

4. Dispositif selon une ou plusieurs des revendications 1 à 3, caractérisé en ce que le tube intérieur (10) et les tubes extérieurs concentriques (7, 8) sont en matière plastique.

5. Dispositif selon une ou plusieurs des revendications 1 à 4, caractériséé en ce que celui (8) des tubes extérieurs concentriques qui est situé le plus à l'extérieur est, à l'une de ses extrémités, taillé en oblique.

6. Dispositif selon une ou plusieurs des revendications 1 à 5, caractérisé en ce que celui (8) des tubes extérieurs concentriques qui est le plus à l'extérieur est engagé dans un tube d'acier (34) qui est taillé en oblique d'un côté et fermé par un couvercle (35) et en ce que le tube d'acier (34) est fixé par une plaque de montage (36) au tube intérieur (3) du compensateur de dilatation (1).

7. Dispositif selon une ou plusieurs des revendications 1 à 6, caractérisé en ce que le tube intérieur (10) est fixé, au moyen d'un support (5) en forme de barre, à la bride fixe (4) de compensateur de dilatation (1), le support (5) comportant une douille (41) qui reçoit l'extrémité avant du tube intérieur (10) dégagée du tube extérieur (8).

8. Dispositif selon la revendication 7, caractérisé en ce qu'une enveloppe de tube fendue (40) fixée au support (5) entoure le tube d'acier (34) et s'étend au moins jusqu'au côté frontal de l'extrémité avant du tube intérieur (10).

9. Dispositif selon une ou plusieurs des revendications 1 à 8, caractérisé en ce que des points terminaux (32) et des prises intermédiaires quelconques (33) de la chaîne de mesure (21) sont reliés, par des conducteurs individuels (31) d'un câble (30) à plusieurs torons, à un emplacement de mesure.

Fig.1

Fig.2

Fig. 3

EP 0 212 103 B1

Fig. 4

Fig.5

Fig.6

Fig.8

40

10

5

41

Fig.7

40

10

41

5

Fig.9

Fig.10

EP 0 212 103 B1